# EUROPEAN PATENT SPECIFICATION

(11) **EP 2 287 512 B1**
(45) Date of publication and mention of the grant of the patent: **11.07.2012**
(21) Application number: 10006573.9
(22) Date of filing: 24.06.2010
(51) Int. Cl.: F16L 55/165, F16L 55/18

(54) **Mobile unit for repairing and/or relining pipes**
Mobile Einheit zur Reparatur und/oder zum Relining von Rohren
Unité mobile pour réparer et/ou regarnir des tuyaux

(30) Priority: 19.08.2009 IT MI20091491
(43) Date of publication of application: 23.02.2011
(73) Proprietor: Idroambiente S.r.l., 20021 Bollate (MI) (IT)
(72) Inventor: Dini, Stefano, 20021 Bollate (MI) (IT)
(74) Representative: Jaumann, Paolo

(56) References cited:
- DE-A1-102005 036 334
- US-A1- 2006 060 255
- US-A1- 2007 095 472

## Description

The present invention relates to a mobile unit for repairing and/or relining pipes.

The present invention is suitable for use in particular in the industrial sector for reconditioning, repairing and/or relining conduits, which are usually underground, such as water pipes, sewage pipes, hydrocarbon or gas supply pipes, irrigation pipes and/or similar pipes, without carrying out excavation work.

As is known, systems or mobile units for reconditioning pipes, which do not require excavation or similar earth-removal work, exist. These units are normally installed in suitably designed lorries or other similar vehicles and envisage a series of components which interact so as to allow insertion of a composite material, in the form of a tubular sheath, inside the pipe or pipes to be reconditioned. Once the composite material has been inserted in a correct position, namely substantially so as to adhere against the inner surface of the conduit to be repaired, the composite material is suitably heated so as to harden and assume a stable configuration.

In particular, among the various components which are used to deposit and harden the composite material, the unit comprises: a supply and deposition device, referred to in the sector as "inverter"; air supply means intended to inflate and feed the tubular sheath of composite material; and steam generating means intended to heat the composite material introduced into the pipes in order to stabilize its structure.

Usually the supply and deposition device comprises a cylindrical housing for the corresponding tubular sheath of composite material to be used. The cylindrical housing extends longitudinally in a horizontal direction, has two generally round end surfaces which extend transversely with respect to its longitudinal extension and is supported by a corresponding base which rests on the loading surface of the respective lorry.

The cylindrical housing contains internally a winch in turn composed of a motor-driven shaft onto which the corresponding tubular sheath of composite material to be used is wound. The step of winding the tubular sheath of composite material is normally performed through an access opening formed in the cylindrical housing situated in the base thereof. The access opening is surrounded by a mounting plate which may be provided with a plurality of holes or a plurality of threaded fixing members projecting therefrom.

The supply and deposition device also comprises a hollow supply portion, referred to in the sector as "volute", for expulsion of the tubular sheath of composite material. Usually, the supply portion has a cylindrical structure which extends longitudinally perpendicularly with respect to the extension of the cylindrical housing and in a direction inclined with respect to a horizontal plane.

The supply portion has a connection opening, suitable for engagement with the access opening of the cylindrical housing, and an expulsion opening which is arranged on the opposite side and through which the tubular sheath of composite material is fed by means of the "inversion" method.

The supply portion is hinged on the cylindrical housing and is movable between a non-operating position, where the connection opening is situated at a distance from the access opening of the cylindrical housing, and an operating position, where the connection opening of the supply portion is engaged hermetically with the access opening of the cylindrical housing so that the latter is in fluid communication with the supply portion itself.

In order to ensure stable engagement of the supply portion with the cylindrical housing, the connection opening is surrounded by a corresponding mounting plate provided with a plurality of fixing holes which, in the operating position, mate with the holes or the threaded fixing members of the access opening of the cylindrical housing. Obviously, corresponding tensioning elements and nuts or similar fixing elements are associated with the threaded fixing members so as to lock together the mounting plates of the access opening and connection opening and thus ensure sealed closure of the cylindrical housing.

The expulsion opening of the supply portion is fitted with an annular plate which bounds its aperture and allows the sheath to be secured thereto. During operation of the unit, the tubular sheath of composite material is fed forwards by means of "inversion" through the abovementioned annular plate.

The abovementioned air supply means comprise an site compressor unit which is in fluid communication with the cylindrical housing via one or more connection pipes. The compressor unit is activated so as to inflate and push the tubular sheath of composite material through the expulsion opening of the supply portion. During expulsion, the tubular sheath of composite material is suitably unfolded inside the conduit by the deposition and supply device or inverter. The compressor unit operates normally at a pressure of about 7 bar and requires the presence of a reducer or regulator for managing the pressure inside the cylindrical housing during this stage.

The abovementioned steam generating means instead comprise a boiler which is manually or automatically adjusted depending on the quantity of steam produced. The boiler is in fluid communication with the cylindrical housing via one or more connection pipes. Although the abovementioned mobile units are able to perform reconditioning of damaged conduits and/or pipes without the need for excavation or similar earth-removal work, the Applicant has noted, however, that these units are not without drawbacks and that various aspects thereof may be improved: these relate mainly to the tightness of the hermetic closure of the cylindrical housing during use of the unit, the need for practical and easy assembly of the threaded fixing members intended to lock the supply portion together with the cylindrical housing, the time needed to lock the supply portion which inevitably has an effect on the quality of the composite material wound onto the motor-driven shaft, the formation of condensation inside the zones supplied by the compressor unit and the boiler, the notable stressing of the composite material in particular during the transition from the elastic/plastic state into the rigid state, as well as the degree of precision of unwinding of the tubular sheath from the motor-driven shaft when it is laid.

In particular, it has been noted that the necessary arrangement of the access opening of the cylindrical housing on the base of the latter does not allow fixing of all the threaded fixing members arranged around this opening. In other words, during the operations for locking the supply portion to the cylindrical housing, the operators are able to access only the threaded fixing members which are situated around the top and side parts of the access openings and do not have the necessary space for fixing the elements which are arranged at the bottom, namely flush with the support surface of the lorry used. The lack of operating space therefore means that it is not possible to perform sufficiently easily adjustment of the threaded fixing members which are arranged on the base of the cylindrical housing and underneath the supply portion. Consequently, in practice, the cylindrical housing is not completely closed using all the elements provided, but is partially fixed by those elements which can be easily accessed and reached.

In view of the increasingly high pressures which are formed inside the cylindrical housing, partial fixing of the supply portion to the latter results in considerable risks both in structural terms and in terms of safety for the operators or any other person situated in the vicinity of the unit.

It must also be considered that the provision of a large number of fixing members requires an equally large amount of time in order for the elements to be correctly fixed by the operators. However, since the composite material used is impregnated with thermosetting resins, the operations for fixing the supply portion to the cylindrical housing must not exceed a predetermined time limit, otherwise the sheath risks being totally destroyed. More particularly, if the time required to lock the supply portion exceeds the maximum time limit determined by the thermosetting resin, all the fixing members must be removed so as to open up the cylindrical housing again and replace the tubular sheath of composite material previously arranged inside it.

It must also be considered that the threaded fixing members usually consist of corresponding threaded tensioning elements incorporated in the structure of the mounting plate for the access opening of the cylindrical housing, so that any wear or deterioration of the said threading results in it becoming unusable, thereby further increasing the risks associated with a hermetic closure which is not effective and pressure-tight.

In addition, wear affecting a large number of tensioning elements results in the need for costly replacement of the contact frame of the supply and deposition device with a frame which has undamaged holes.

It should be noted that, when the sheath is loaded inside the cylindrical housing or inverter by means of winding onto the shaft, it undergoes rolling by means of two calendering rolls which are normally situated on a special impregnation machine or in some cases are situated inside the volute of the inverter, but in a permanent manner, resulting in the (usually hydraulic) system being subject to damaging thermal stresses during heating of the sheath.

It should also be noted that the site compressor unit and the boiler provide, independently of each other, respective fluids, the supply of which is regulated manually by the operators. The boiler tends to operate in an intermittent manner with self-regulation depending on the steam required/produced, while the compressor unit works continuously. This different mode of operation for supply of the fluids produces, inside the cylindrical housing and the sheath undergoing hardening, a continuous oscillation both in temperature and pressure since the compressor unit is unable to adapt to the variations present in the supply of the steam from the boiler.

The problems associated with the intermittent supply of steam and the continuous supply of compressed air are further increased when the conduits and/or pipes to be reconditioned have a considerable length or are exposed to external cooling, for example due to the action of groundwater or other similar phenomena. In this situation, the temperature and pressure oscillations give rise to an undesirable formation of condensation along the composite material with the result that the latter is subject, especially during hardening, to notable thermal and structural stresses which may damage it.

It must also be mentioned that the system for unwinding and unfolding the tubular sheets of composite material has a number of limitations during the supply of tubular sheaths with larger diameters, namely between about 500 mm and 1000 mm. In this case, the inversion and unwinding of the tubular sheaths tends not to be precise and linear, especially along bends or slopes or during critical pipe-laying conditions and/or the like, resulting in the need for continuous intervention on the part of the operators in order to adjust the pressure so as to ensure optimum laying. Some types of sheaths also require a strong and uniformly applied pressing force, which exceeds considerably the minimum pressure required for inversion, stressing in an extreme manner the winch components inside the inverter.

US 2007/0095472 discloses an apparatus for inverting and inserting a lining material into an pipeline. The lining material is fed to an inverting nozzle through a mounting pipe, from a storage container. Once the lining material is placed, the storage container is completely detached from the mounting pipe to be replaced by a pressure lid for the subsequent steps of feeding compressed air and a hot fluid for heating the lining material.

US 2006/0060255 discloses a process for lining a pipeline wherein a liner is pulled into the pipeline in a flat state, then an eversion bladder is inserted into the liner from an end to expand it against the pipeline and to heat it to promote curing.

The object of the present intention is to propose a mobile unit for repairing and/or relining pipes able to solve the problems encountered in the prior art.

In particular, one object of the present intention is to propose a mobile unit in which the cylindrical housing is safe and reliable in compliance with the directives applicable to machines and the regulations governing pressurized plants.

A further object of the invention is to provide a mobile unit where the supply portion can be locked on to the cylindrical housing in a simple and practical matter.

A further object of the invention is to reduce the time needed to lock the supply portion on the cylindrical housing.

One object of the invention is to optimize rolling of the sheath through the oppositely arranged rolls usually located on the outside of the inverter or in other cases permanently housed inside the closing volute, required for preparation of the composite material of the sheath. An object of the present invention is also to reduce and/or eliminate the formation of condensation along the tubular sheaths of composite material.

An object of the present invention is to improve significantly control over the inversion operation, in particular when pressures greater than the minimum feeding limit must be used, i.e. in the case of rigid sheaths, bends, special diameters and so on.

One object of the present invention is to reduce the thermal and mechanical stresses acting on the composite material especially during hardening thereof.

This object, together with others, is substantially achieved by a mobile unit for repairing and/or relining pipes in accordance with that stated in the accompanying claims.

The description of a preferred, but non-exclusive embodiment of a mobile unit for repairing and/or relining pipes is now provided with reference to the accompanying drawings in which:
Figure 1 is a schematic diagram of a mobile unit for repairing and/or relining pipes, in accordance with the present invention, shown during the laying of a tubular sheath of composite material;
Figure 2 is a further schematic diagram of the unit according to Figure 1, shown during hardening and stabilization of the deposited tubular sheath of composite material;
Figure 3 is a perspective view of the unit according to the preceding figures;
Figure 4 is a further perspective view of the unit according to the preceding figures;
Figure 5 is a perspective view of a supply and deposition device of the unit according to the preceding figures, shown in the open condition with a supply portion raised;
Figure 6 is a perspective view of the device according to Figure 5, shown in the closed condition with the supply portion locked in the lowered position;
Figure 7 is a rear view of two locking frames of the device according to Figures 5 and 6, shown in the open position;
Figure 8 is a top plan view of the locking frames according to Figure 7;
Figure 9 is a rear view of the locking frames according to Figures 7 and 8, shown in a closed position;
Figure 10 is a top plan view of the locking frames according to Figure 9;
Figure 11 is a rear perspective view of the locking frames according to Figures 9 and 10;
Figure 12 is a perspective view of the supply portion of the device according to Figures 5 to 7;
Figure 13 is a further perspective view of the supply portion according to Figure 12;
Figure 14 is an elevation view of a plate for closing the supply portion according to Figure 13;
Figure 15 is a further elevation view of the closing plate according to Figure 14, engaged by the tubular sheath of composite material;
Figure 16 is a further elevation view of the plate according to Figures 14 and 15, shown with the tubular sheath of composite material locked by a band with tensioning elements;
Figure 17 is a further elevation view of the plate according to Figures 14 and 15, shown with the tubular sheath of composite material locked by two straps;
Figure 18 is a schematic perspective view of the device according to Figures 5 to 7, shown during expulsion of the tubular sheath of composite material.

With reference to the accompanying figures, 1 denotes in its entirety a mobile unit for repairing and/or relining pipes, in accordance with the present invention.

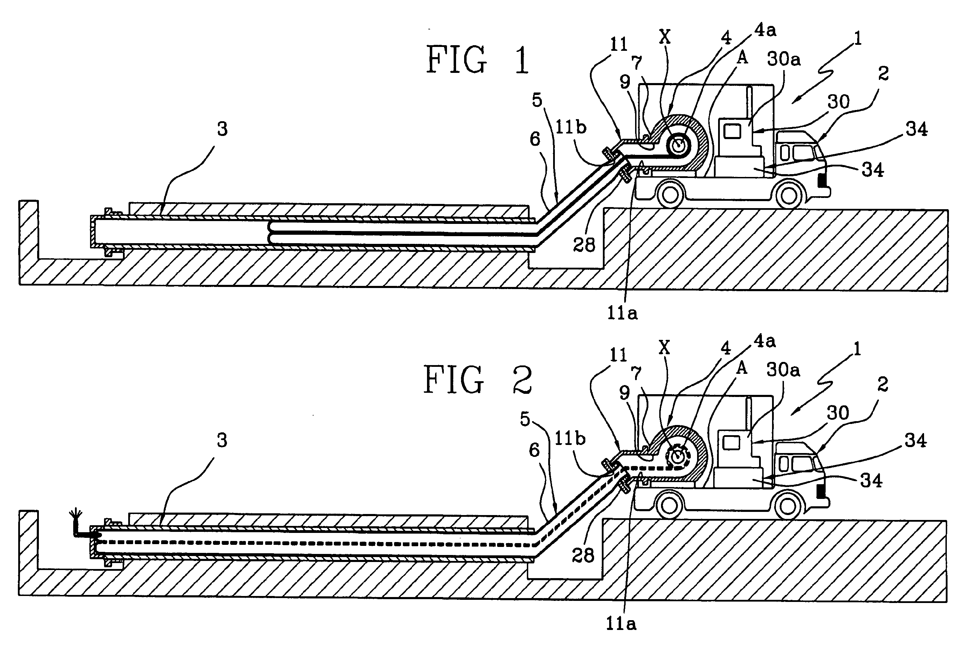

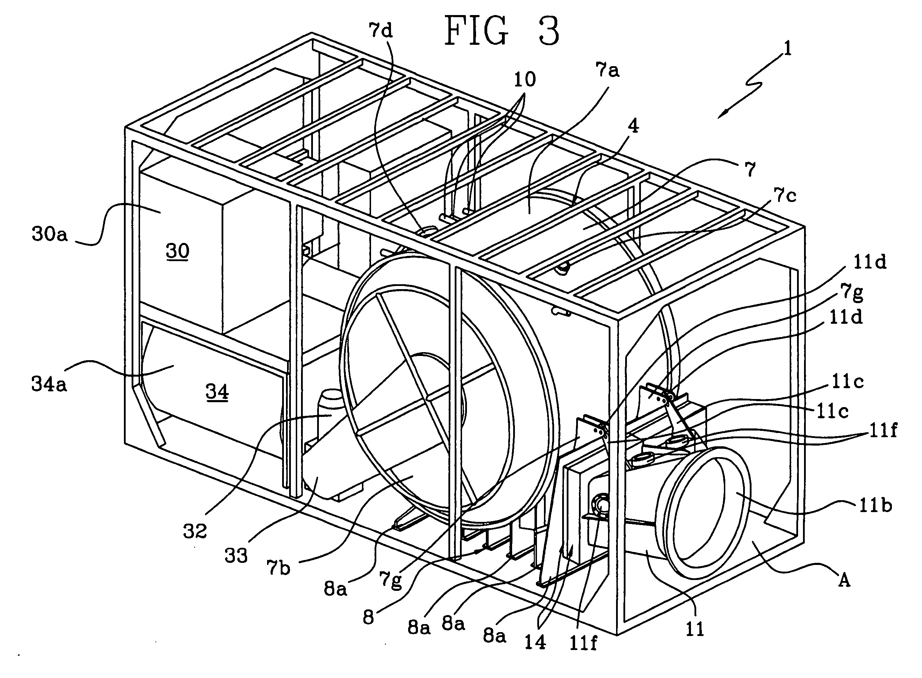

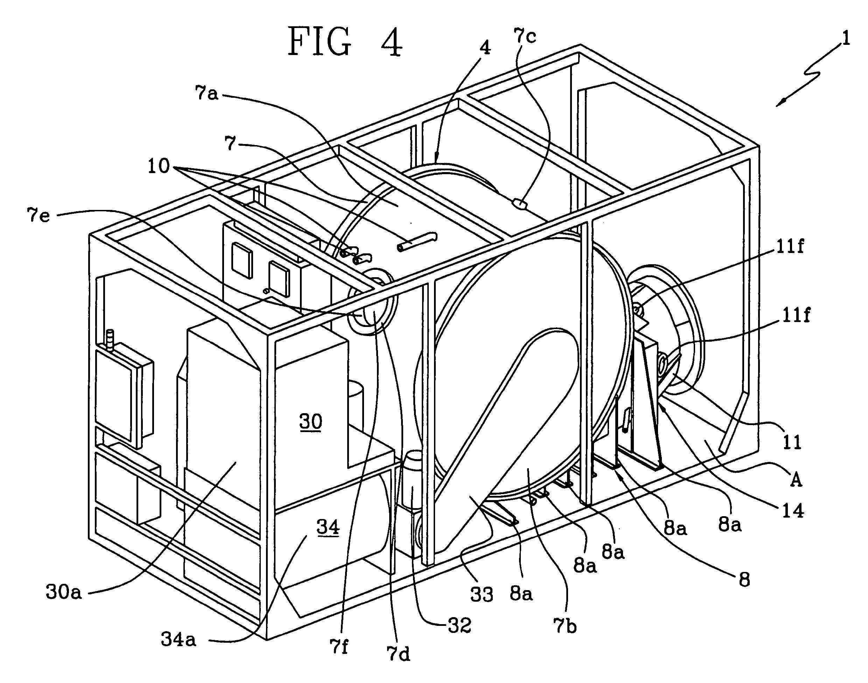

As can be seen in Figures 1 and 2, the unit 1 may be advantageously installed inside shipping containers or a suitable vehicle 2, preferably a lorry or a similar vehicle, able to transport the unit 1 from one location to another where respective conduits 3 or similar pipes which require one or more reconditioning, repair and/or relining operations are situated. Generally, the unit 1 is suitable for use on underground conduits 3 or pipes, replacement of which would require a series of operations involving excavation and unearthing of the said conduits/pipes or reconditioning using other relining processes. With reference to Figures 3 and 4 the unit 1 comprises a supply and deposition device 4, referred to in the sector as an "inverter", designed to deposit a material 5 suitable for repairing and/or relining the abovementioned conduits 3 or pipes. Advantageously, the material 5 used for reconditioning of the damaged underground pipes is a composite, preferably flexible, material in the form of a tubular sheath 6 (Figures 1, 2 and 15 to 18).

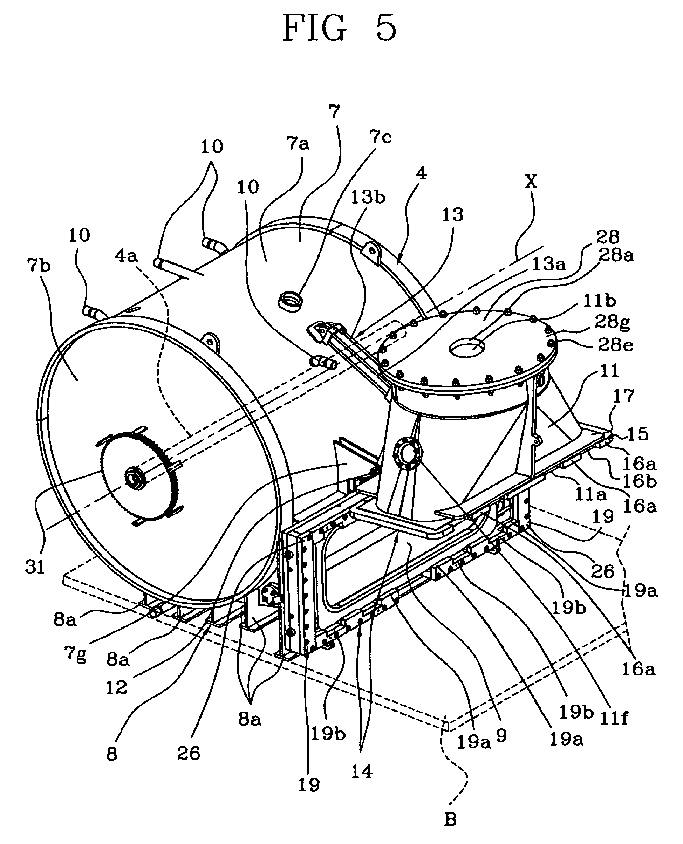

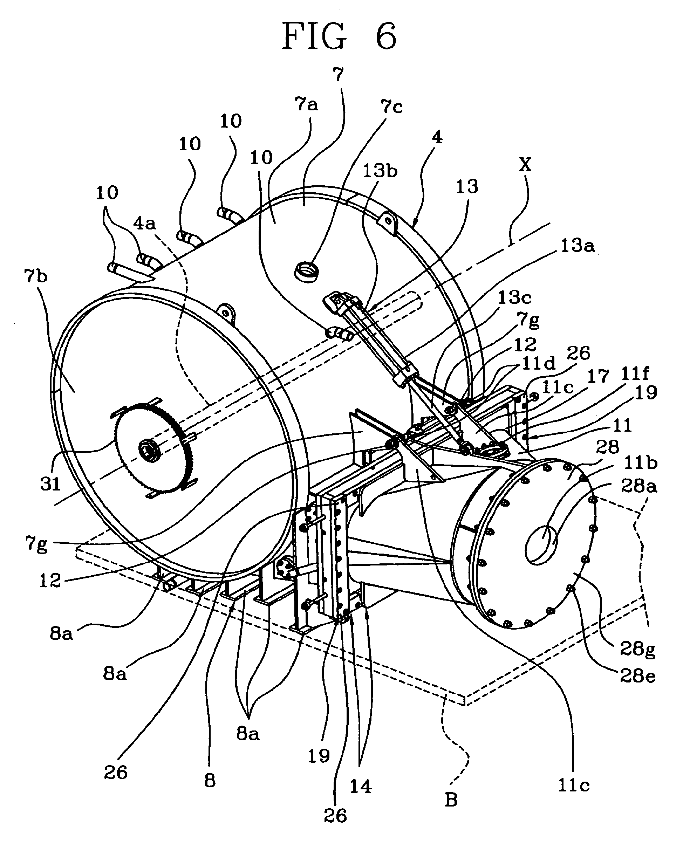

As can be seen in Figures 3 to 6, the supply and deposition device 4 has a housing 7 for the composite material 5 which is wound entirely around a motor-driven shaft 4a which extends inside the housing 7 along an axis of rotation "X" (Figures 5 and 6) which is preferably horizontal.

Still with reference to Figures 3 to 6, the housing 7 has a substantially cylindrical shape with a cylindrical sidewall 7a, which extends substantially parallel to the axis of rotation "X", and two end walls 7b which extend transversely with respect to be cylindrical sidewall 7a in a tank-like configuration. As can be seen in Figures 3 to 6, each of the end walls 7b is formed in the manner of a semi-spherical cap and is hermetically fixed, for example by means of welding, to the cylindrical sidewall 7a.

Advantageously, the housing 7 is engaged on a support base 8 which has a plurality of sections 8a in the form of an overturned T designed to reinforce the structure and be fixed onto a loading surface "A" (Figures 1 to 4) or onto a frame "B" (Figures 5 and 6) of the corresponding vehicle 2 used.

With reference to Figure 5, the housing 7 is advantageously provided with an access opening 9 which is formed through the cylindrical sidewall 7a along and preferably in the vicinity of the support base 8 and with a substantially rectangular configuration. The access opening 9 allows both insertion of the tubular sheath 6 of composite material 5 inside the housing 7 during winding of the material around the corresponding motor-driven shaft 4a and expulsion of the tubular sheath 6 when it is deposited.

The housing 7 is also provided with a plurality of tubular pipes 10 which extend projecting from the cylindrical sidewall 7a, in a manner substantially perpendicular to the motor-driven shaft 4, so as to establish fluid communication between the housing 7 and other components and devices of the unit 1 which will be described in detail during the course of the present description.

Still with reference to Figures 3 to 6, the housing 7 also comprises a series of portholes 7c via which the conditions inside the housing 7 may be monitored during operation of the unit 1. The abovementioned portholes 7c may have small dimensions, similar to small circular windows, or larger dimensions, defined, for example, by a tubular portion 7d (Figures 3 and 4) which extends from the cylindrical sidewall 7a and on the free end edge of which a closing plate 7e provided with a circular window 7f is suitably fixed by means of a plurality of bolts (Figure 4).

As can be seen in Figures 3 to 6, the supply and deposition device 4 comprises at least one hollow supply portion 11, referred to in the sector as "volute", with a connection opening 11a and an expulsion opening 11b arranged on respectively opposite sides. The supply portion 11 is preferably hinged on the housing 7, advantageously above the access opening 9. For this purpose, the supply portion 11 has two hinging plates 11c which each extend from a top side of the supply portion 11, parallel to each other and in a direction inclined with respect to a horizontal reference plane. Each hinging plate 11c has a tapered free end 11d provided with a respective through-hole 11e for engagement of a corresponding hinging pin 12 which passes through corresponding hinging plates 7g projecting from the cylindrical sidewall 7a of the housing 7.

The supply portion 11 is therefore rotatably movable between an operating position (Figure 6), where the connection opening 11a is in fluid communication with the access opening 9, and a non-operating position (Figure 5), where the supply portion 11 is spaced from the housing 7, in a position raised with respect thereto.

In greater detail, the connection opening 11a of the supply portion 11 has a substantially rectangular shape, which is preferably similar to the access opening 9 of the housing 7, while the expulsion opening 11b has a substantially circular shape. The supply portion 11 also has, between the connection opening 11a and the expulsion opening 11b, a substantially tubular structure. In the same way as the housing 7, the supply portion 11 has a series of portholes 11f which allow the inside thereof to be monitored during operation of the unit 1.

Still with reference to Figures 5 and 6, a movement member 13 is operationally arranged between the supply portion 11 and the housing 7, said member being able to be activated so as to move the supply portion 11 between the non-operating position and the operating position.

Preferably, the movement member 13 comprises at least one fluid-dynamic actuator 13a which has at least one cylinder 13b, hinged externally on the cylindrical sidewall 7a, and a stem 13c (Figure 6) sliding longitudinally along the cylinder 13b and hinged on the structure of the supply portion 11 on the opposite side to the housing 7.

With reference to Figures 3 to 11, the unit 1 is advantageously provided with fast-locking means 14 operationally arranged between the access opening 9 of the housing 7 and the connection opening 11a of the supply portion 11 so as to join the latter hermetically and stably to the housing 7.

Advantageously, the fast-locking means 14 may be switched between a disengaged condition (Figure 5), where the movement of the supply portion 11 between the non-operating position (Figure 5) and the operating position (Figure 6) may be performed, and a locked condition (Figure 6), where the supply portion 11 is locked in the operating position with the connection opening 11a hermetically engaged with the access opening 9 of the housing 7.

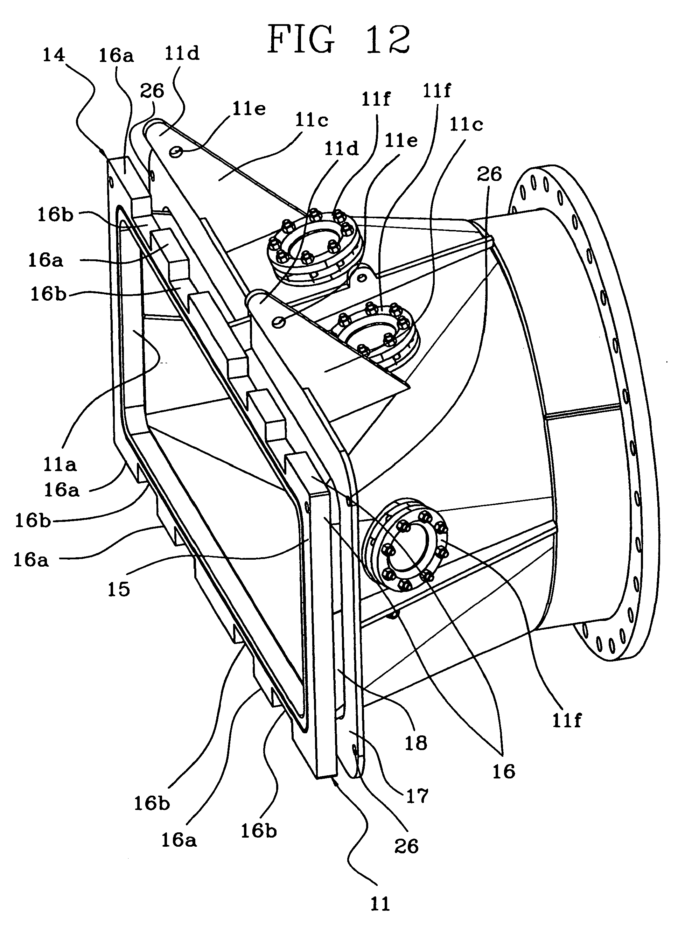

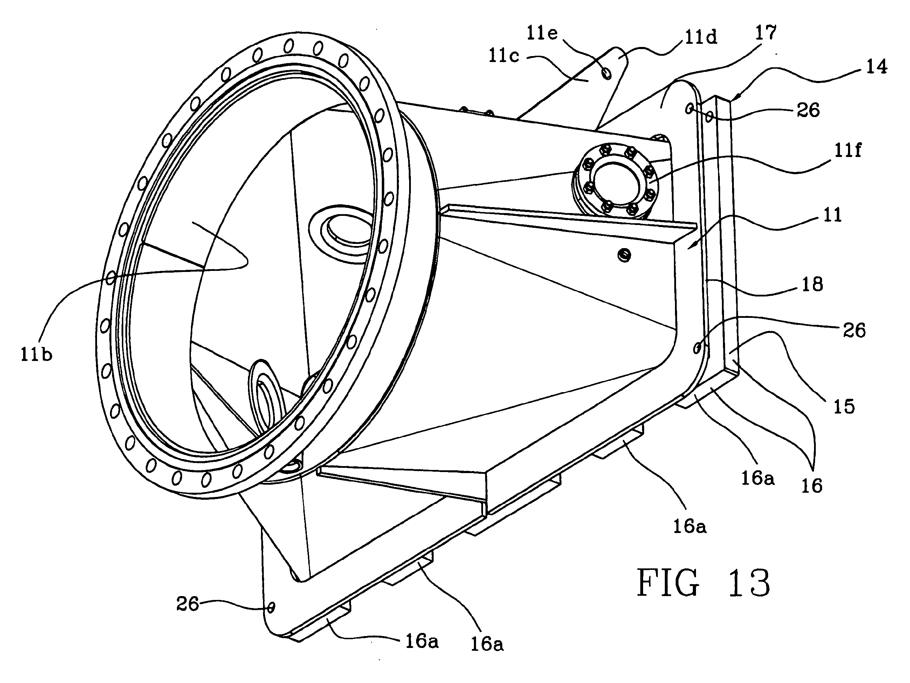

In particular, the fast-closing means 14 comprise at least one coupling flange 15 (Figures 12 and 13) which is engaged, preferably rigidly, opposite and substantially around the connection opening 11a of the supply portion 11.

As can be seen in Figures 12 and 13, the coupling flange 15 extends substantially parallel to the shape of the connection opening 11a of the supply portion 11. In other words, the coupling flange 15 has an annular, substantially rectangular, extension extending in the manner of a frame around the connection opening 11a of the supply portion 11.

Advantageously, the supply portion 11 has an outer edge 16 which is at least partly toothed. The outer edge 16 of the coupling flange 15 is preferably provided with a plurality of teeth 16a alternating with a plurality of recesses 16b. Each tooth 16a has a substantially square, preferably rectangular, shape so that the intermediate recesses 16b, defined between one tooth 16a and another, each have a square, substantially rectangular profile.

With reference to the embodiment shown in Figures 12 and 13, both the teeth 16a and the recesses 16b are located along the long sides of the coupling flange 15, while the remaining short sides have a smooth profile without teeth or respective undercuts.

Still with reference to Figures 12 and 13, the coupling flange 15 defines, together with a contact plate 17 of the supply portion 11, a coupling seat 18 which extends along the entire extension of the coupling plate 15.

Advantageously, the fast-locking means 14 also comprise a pair of locking frames 19 which are operationally engaged opposite the access opening 9 of the housing 7. The locking frames 19 are movable between an open position (Figures 5, 7 and 8), where the supply portion 11 is free from the housing 7, and a closed position (Figures 6 and 9 to 11), where the supply portion 11 is locked against the housing 7 so as to produce a hermetic connection between the access opening 9 and the connection opening 11a of the supply portion 11.

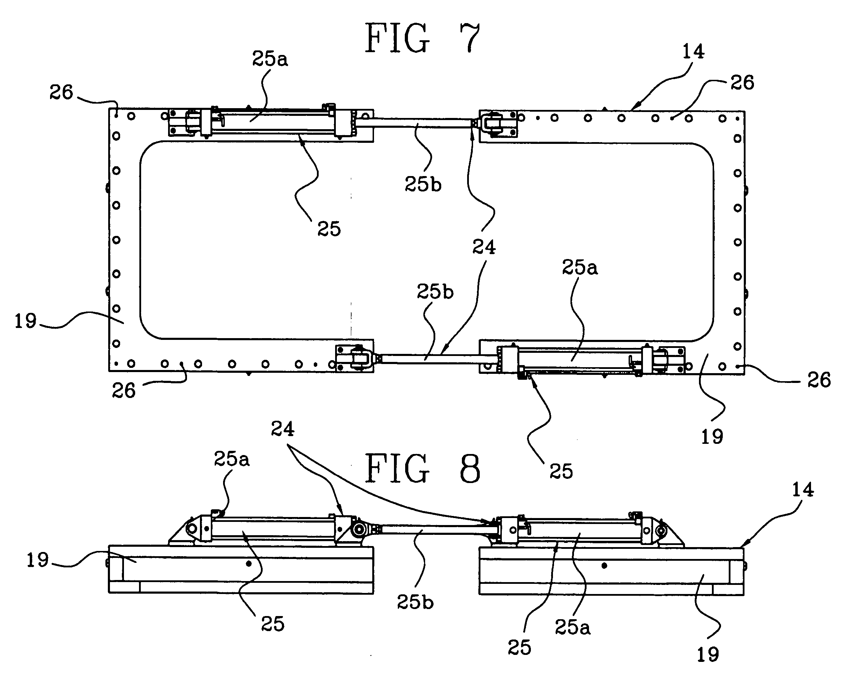

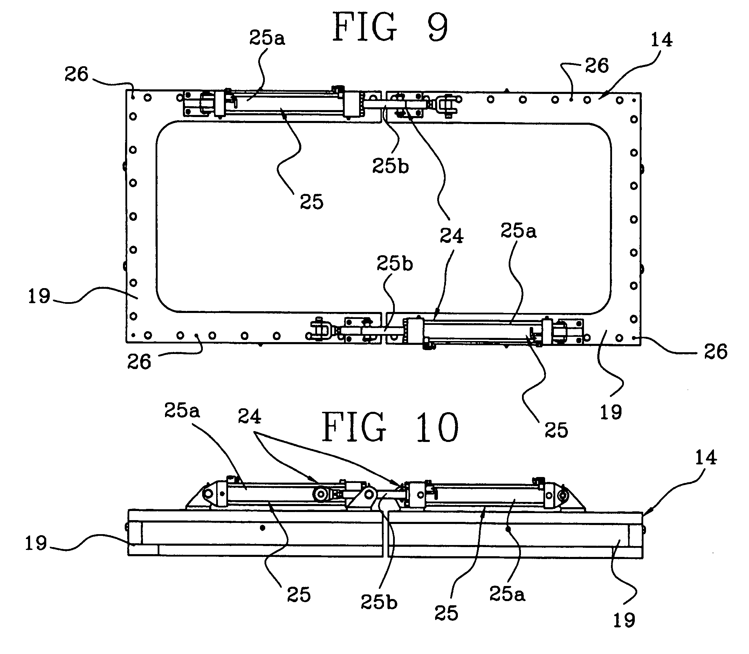

Each locking frame 19 also has, along a plane of lie substantially parallel to the plane of lie of the access opening 9 of the housing 7, an open shape, which, viewed at the rear (Figure 7 and 9), has a substantially flat-lying U-shape.

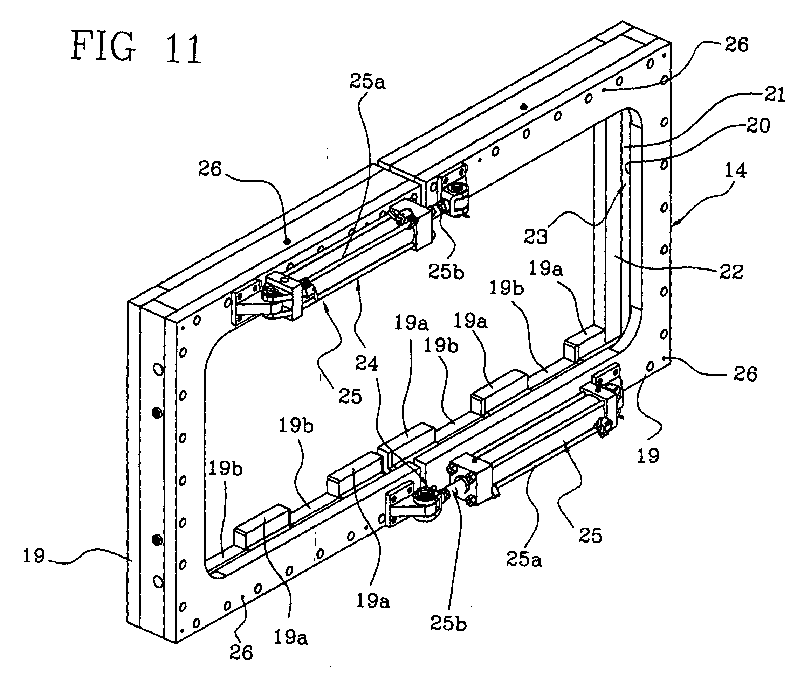

Moreover, each locking frame 19 has, viewed in cross-section, a substantially U-shaped profile defining a contact edge 20 (Figure 11), an intermediate wall 21 (Figure 11) extending transversely with respect to the contact edge 20, and a locking edge 22 (Figure 11) which extends from the intermediate wall 21 substantially parallel with the contact edge 20.

The contact edge 20, the intermediate wall 21 and the locking edge 20 define a corresponding locking seat 23 (Figure 11) which extends along the entire extension of the corresponding locking frame 19. Advantageously, the locking frames 19 are arranged so as to have the respective contact edges 20, in the vicinity of the housing 7, and the locking edges 22, in the vicinity of the supply portion 11.

As can be seen in Figures 5 and 12, the locking edge 22 of each locking frame 19 is defined by a plurality of teeth 19a alternating with a plurality of recesses 19b. Advantageously, each tooth 19a has a substantially square, preferably rectangular, shape so that the intermediate recesses 19b, defined between one tooth19a and another, each have a square, substantially rectangular, profile. Preferably, the teeth 19a and the recesses 19b are identical to the teeth of 16a and the recesses 16b of the coupling flange 15.

In greater detail, when the locking frames 19 are in the open position (Figure 5) and the supply portion 11 is in the operating position, the teeth 19a and the recesses 19b mate respectively with the recesses 16b and the teeth 16a of the coupling flange 15 of the supply portion 11.

When the supply portion 11 is in the operating position, i.e. when the coupling flange 15 is situated opposite the locking seat 23, the coupling portion 15 is arranged between the contact edges 20 and the locking edges 22 of the corresponding locking frames 19. In this position, the locking edges 22 of the locking frames 19 are instead located opposite the coupling seat 18 of the supply portion 11. Advantageously, the recesses 19b of the locking frames 19 are slightly inclined upwards in the direction of the access opening 9, so as to cause insertion by means of interference of the respective teeth 16a of the coupling flange 15.

Preferably, the abovementioned fast-closing means 14 also comprise at least one movement device 24 (Figures 7 to 11), preferably a pair of fluid-dynamic actuators 25, operationally associated with the locking frames 19 so as to perform the relative movement of the latter between the open position and the closed position along a plane substantially parallel to the plane of lie of the access opening 9 of the housing 7.

When the locking frames 19 are positioned closed against the corresponding coupling flange 15, the locking frames 19 are arranged with their end faced in mutual contact so as to define a closed and continuous frame in which the teeth 19a and the recesses 19b are aligned respectively with the teeth 16a and the recesses 16b of the coupling flange 15 of the supply portion 11. In this situation, the coupling flange 15 of the supply portion 11 remains against the contact edges 21 of the locking frames 19 and is retained inside the respective locking seat 23 by the teeth 19a of the locking frames 19. Preferably, the fluid-dynamic actuators 25 associated with the locking frames 19 are arranged substantially horizontally and are oriented in opposite directions. In particular, a first fluid-dynamic actuator 25 comprises a cylinder 25a engaged with a first locking frame 19, and a movable stem 25b fixed to the second locking frame 19. A second fluid-dynamic actuator 25 comprises instead a cylinder 25a engaged with the second locking frame 19, and a movable stem 25b fixed to the first locking frame 19.

In order to ensure optimum alignment between the supply portion 11 and the access portion 9 of the housing 7, both the contact plate 17 and the locking frames 19 are provided with a plurality of fixing holes 26 (Figures 7 to 13) designed to be engaged by corresponding threaded fixing members (not shown since known).

In greater detail, some of the fixing holes 26 formed through the contact plate 17 and the locking frames 19 are formed in the corners of these parts in order to house corresponding sensors for detecting that closing has been performed. In this way it is possible to prevent or allow the subsequent oil-dynamic opening operation or start-up of the motor for rotation of the internal shaft 4a or opening of the air inlet valve.

Alternatively, it is possible to use also two end-of-travel devices formed by means of a rod whch is rigidly hinged on a locking frame 19 and slides inside a cylinder in turn fixed rigidly to the other locking frame 19, resulting in a kind of inertia piston. The stop will be formed by a cylindrical part integrally fixed by means of threading to the sliding rod which will make contact against the rear of the cylinder once the locking frames 19 have been opened. The thread allows fine adjustment of the stopping point.

When the supply portion 11 is locked in the operating position by the locking frames 19, the fixing holes 26 of the contact plate 17 and the locking frames 19 are aligned substantially horizontally and perpendicularly with respect to the motor-driven shaft 4a,

In order to allow the fixing holes 26 to be easily accessed by the operators during locking and releasing of the supply portion 11, the fixing holes 26 are located in sides zones of the supply portion 11, namely suitably laterally spaced from the expulsion opening 11b of the latter.

With reference to Figures 5, 6 and 14 to 17, the unit 1 comprises at least one closing plate 28 which can be fixed onto the supply portion 11 opposite the expulsion opening 11b.

In detail, the closing plate 28 has a substantially circular shape with approximately the same diameter as the expulsion opening 11b of the supply portion 11.

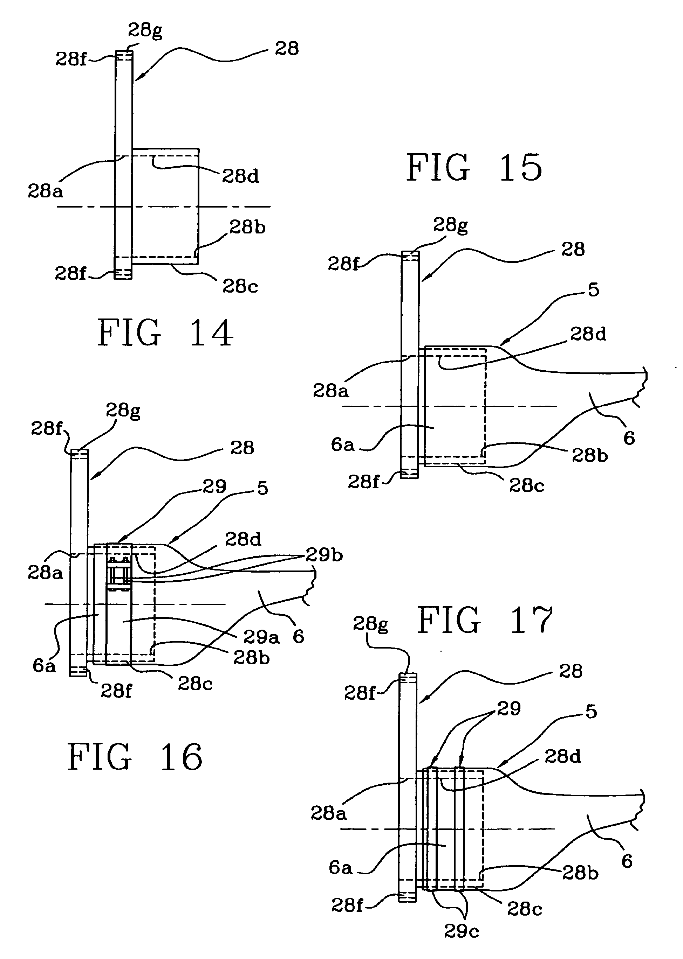

The closing plate 28 has a through-hole 28a for feeding the tubular sheath 6. This through-hole 28a may be located centrally (Figures 5 and 6) or off-centre (Figures 14 to 17) with respect to the closing plate 28. When the closing pate 28 is fixed onto the supply portion 11, the through-opening 28a is in fluid communication with the expulsion opening 11b.

Advantageously, the closing plate 28 is provided, opposite the through-opening 28a, with a substantially cylindrical nozzle 28b.

As can be seen in Figures 14 to 17, the nozzle 28b projects from the closing plate 28 so as to pass through the expulsion opening 11b of the supply portion 11 when the closing plate 28 is mounted on the latter. In particular, when the closing plate 28 is fixed onto the supply portion 11, the nozzle 28b lies inside the supply portion 11 so as to provide a suitable support for the tubular sheath 6.

Still with reference to Figures 14 to 17, the nozzle 28b has a cylindrical outer surface 28c designed to support an end portion 6a of the tubular sheath 6. In other words, the cylindrical outer surface 28c of the nozzle 28 is suitable for receiving externally the tubular sheath 6.

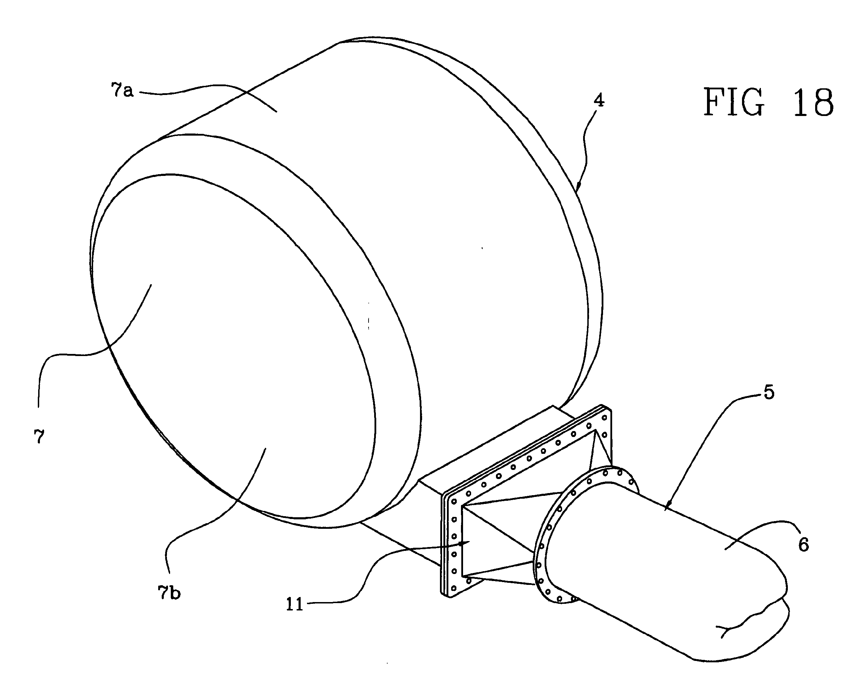

The nozzle 28b also has a cylindrical inner surface 28d which defines a corresponding guide channel for feeding and expulsion (Figure 18) of the tubular sheath 6 of composite material 5.

With reference to Figures 5 and 6, the closing plate 28 can be fixed to the expulsion opening 11b of the supply portion 11 by means of a plurality of threaded fixing members 28e, such as bolts and the like, which fit inside respective through-holes 28f formed along a perimetral edge 28g of the closing plate 28 and corresponding through-holes distributed around the expulsion opening 11b. Advantageously, the unit 1 is also provided with at least one locking member 29 which can be applied on to the cylindrical outer surface 28c of the nozzle 28b so as to press the end portion 6a of the tubular sheath 6 against the latter. In this way, the tubular sheath 6 is retained against the nozzle 28b during operation of the unit 1. Preferably, the locking member 29 comprises at least one band 29a with tensioning elements 29b (Figure 16) which is suitably mounted during assembly of the unit 1. As an alternative to or in conjunction with the band 29a with tensioning elements 29b, the locking member 27 may comprise at least one locking strap 29c (Figure 17), preferably of the metallic type.

In order to allow feeding and expulsion of the tubular sheath 6 in an inflated condition, the unit 1 is advantageously provided with compressed-air supply means 30.

In detail, the compressed-air supply means 30 are in fluid communication with the housing 7 via one or more of the abovementioned tubular pipes 10 and corresponding valve devices (not shown) designed to manage the compressed air flow.

The means 30 can be advantageously activated only when the supply portion 11 is arranged in the operating position so as to pressurize the housing 7. The increase in the pressure inside the housing 7 causes initial unfolding of the tubular sheath 6 which is fixed onto the nozzle 28b. In this situation, the tubular sheath 6 closes off both the expulsion opening 11b and the through-opening 28a of the closing plate 28, thus hermetically isolating the housing 7 from the external environment. Once the compressed-air supply means 30 have been activated, the end portion 6a of the tubular sheath 6 penetrates into the guide channel defined by the nozzle 28b and is pushed towards the outside in an inflated condition, as shown in the diagram of Figure 18.

The compressed-air supply means 30 comprise advantageously at least one blower 30a for producing compressed air at a low pressure, preferably not higher than 2 bar, more preferably not higher than 1 bar and even more preferably not higher than 0.9 bar. Advantageously, the blower 30a is able to regulate automatically the compressed-air flow supplied inside the housing 7 depending on a preselected pressure value and the consumption required by the flow through the sheath 6 which will be provided with suitable relief valves.

In order to allow controlled laying of the tubular sheath 6, feeding of the sheath is performed together with suitable controlled rotation of the motor-driven shaft 4a.

As can be seen in Figures 5 and 6, the motor-driven shaft 4a is integrally joined to one or more gearwheels 31 arranged on the outside of the housing 7 on one of the end walls 7b. The gearwheels 31 are operationally engaged by a corresponding drive chain (not shown since known) which operationally engages with a drive shaft (not shown) of an electric vector motor 32 (Figures 3 and 4).

As can be seen in Figures 3 and 4, the chain or belt is covered by a respective protective housing 33 which prevents any contact between the workers and the moving chain.

The electric vector motor 32 can be advantageously switched between a first operating condition, where it rotatably drives the motor-driven shaft 4a, and a second operating condition, where it acts as a device for braking the motor-driven shaft 4a by absorbing torque.

In order to stabilize and harden the composite material 5 once the respective tubular sheath 6 has been deposited inside the pipe 3 to be repaired, the unit 1 is provided with steam generating means 34, preferably a boiler 34a. The steam generating means 34 are operationally associated, via one or more of the aforementioned tubular pipes 10, with the supply and deposition device 4 so as to supply steam to the housing 7. In this way, the means 34 provide steam which is suitably mixed inside the inverter together with the blower air and strikes the tubular sheath 6 at a temperature sufficient to cause hardening of the composite material 5.

The operating principles of the unit 1, which is described above in purely structural terms, is as follows:
Before activating the unit 1, the tubular sheath 6 of composite material 5 is extended over an area sufficiently long to allow preliminary impregnation thereof with a thermosetting resin.
Impregnation is concluded with a rolling step performed by means of two calendering rolls which ensure suitable and correct application of the thermosetting resin.

In particular, in order to allow loading of the sheath 6 inside the housing 7, the latter is opened by arranging the supply portion 11 in the non-operating position, i.e. so that it is raised with respect to the access opening 9. In this situation, the tubular sheath 6 of composite material 5, which has dimensions suitable for the pipe 3 to be repaired, is wound around the respective motor-driven shaft 4a. Winding of the tubular sheath 6 of composite material 5 is performed by fixing the latter onto the motor-driven shaft 4a and causing rotation thereof by means of operation of the electric vector motor 32. Advantageously, winding of the tubular sheath 6 of composite material 5 is not performed completely so that its end portion 6a may be mounted on the cylindrical outer surface 28c of the nozzle 28b lying inside the supply portion 11. Then the end portion 6a of the tubular sheath 6 of composite material 5 is fixed onto the nozzle 28b by fitting the locking member 29. In this way, the tubular sheath 6 of composite material 5 closes off the expulsion opening of the supply portion 11 as well as the through-opening 28a of the closing plate 28.

Once the tubular sheath 6 of composite material 5 has been fixed in position, the supply portion 11 is moved from the non-operating position (Figure 5) to the operating position (Figure 6) by means of activation of the respective movement member 13.

When the supply portion 11 reaches the operating position, the teeth 16a of the coupling flange 15 pass through the recesses 19b of the locking frames 19 between the teeth 19a of the latter, until they come up against the contact edges 20 of the locking seat 23.

When the supply portion 11 is in the operating position, the locking frames 19 are moved from the open position into the closed position. The locking frames 19 move towards each other until their end faces make contact with each other. During closing of the locking frames 19, the teeth 19 of the latter move parallel to the coupling flange 15 until they come up against the teeth 16a of the coupling flange 15, locking the latter inside the locking seat 23. In other words, alignment of the teeth 16a, 19a does not allow the coupling flange 15 to move from the locking seat 23, consequently retaining the supply portion 11 in the operating position, namely with the connection opening 11a hermetically in fluid communication with the access opening 9 of the housing 7.

Advantageously, the locking-frame closing system may also be used as a system for closing the expulsion opening 11b.

Once hermetic closure of the housing 7 has been ensured, by closing the access opening 9 and closing off the expulsion opening 11b of the supply portion as well as the through-opening 28a of the closing plate 28, the compressed-air supply means 30 are activated so as to expel, preferably gradually, the tubular sheath 6 in an inflated condition, as schematically shown in Figure 22.

The increase in pressure inside the housing 7 pushes the tubular sheath 6 outwards. Since the tubular sheath 6 is retained on the nozzle 28b by the locking member 29, the thrust received by the pressure inside the housing 7 causes unfolding of the tubular sheath 6 which is unwound outwards.

During feeding of the tubular sheath 6, the motor-driven shaft 4a is suitably controlled, via one or more electronic control units (not shown), so as to guide feeding of the tubular sheath 6 or act as a braking device for this feeding movement.

In other words, the electric vector motor 32 which causes movement of the motor-driven shaft 4a is able to operate as a conventional motor with the possible addition of a reduction unit and as a braking generator by means of torque absorption. When the electric vector motor 32 is used as a braking generator, the braking function applies the torque to the thrust which the motor receives via the said drive shaft, transferring to the absorption and dissipating resistors the energy produced, equal to the power of the motor. Adjustment of the braking torque is advantageously managed in exactly the same way as regulation of the speed during driving.

During feeding of the tubular sheath 6, the latter is suitably guided by the operators towards the mouth of the pipe 3 to be repaired. Once it has been introduced into the corresponding pipe 3, the tubular sheath 6 advances along it, as shown in Figure 1. During its feeding movement inside the respective pipe 3, the tubular sheath 6 adheres to the inner surface of the pipe, forming the innermost layer thereof. Once the entire length of the pipe 3 to be reconditioned , or at least the damaged part thereof, has been covered (Figure 2), the steam generating means 34 are activated while maintaining operation of the compressed-air supply means 30. In this way, the compressed-air supply means 30 keep the tubular sheath 6 in an inflated condition so that it adheres perfectly to the inner surface of the pipe 3, while the steam generating means 34 heat the entire tubular sheath 6 until a temperature suitable for causing structural hardening of the composite material 5 is reached. When the structure of the composite material 5 is stabilized, it forms a rigid and integral inner layer forming part of the damaged pipe.

Advantageously, during heating of the tubular sheath 6 of composite material 5, one or more breather holes are formed, preferably in its end, so as to allow the steam and compressed air to pass out through suitable manual opening valves, thus preventing damage to the structure of the composite material 5.

Once the composite material 5 has become rigid and solid, it is suitably cut at the inlet and outlet openings of the pipe 3 and the unit 1 is reset to its initial condition.

The unit 1 in accordance with the present invention solves the problems encountered in the prior art and achieves important advantages.

Firstly, closing of the housing is easy and practical to perform, ensuring an optimum hermetic seal between the housing itself and the supply portion, while ensuring safety during operation of the unit both for the operators and any persons standing in the vicinity of the unit. More particularly, the provision of the aforementioned fast-locking means facilitates fixing of the supply portion to the housing without having to mount a plurality of threaded fixing members which are normally difficult to handle. Locking of the supply portion, which may be performed more or less automatically by means of operation of the respective movement members, results in a considerable saving in time since this operation requires only two steps, i.e. a first step for positioning the supply portion in the operating position and a second step for closing the locking frames which lock the supply portion hermetically against the housing. Owing to the presence of the fast-locking means, the number of threaded fixing members may be reduced considerably and they may be arranged on the sides of the supply portion in positions which can be easily accessed by the operators.

It should also be considered that the reduction in the amount of time needed to perform closing and locking of the supply portion helps preserve the composite material introduced inside the housing and normally impregnated with a suitable hardening resin. Owing to faster closing and locking of the supply portion, the unit may be activated and therefore the corresponding tubular sheath of composite material deposited before it starts to harden.

It must also be considered that use of the blower as a compressed-air supply means is fairly advantageous owing to its intrinsic capacity to regulate automatically and continuously the air flow rate depending on the pressure value selected for the housing. More particularly, once the pressure value of the housing has been set, the blower automatically regulates its flow rate depending on variations in the amount of steam produced by the boiler. By means of compensation of the flow of the low-pressure heating air it is possible to obtain maximum uniformity in pressurization of the tubular sheath, even in the event of malfunctions, blocking of the breather holes, breakage of the sheath or major difficulties in management of the steam produced.

It must also be noted that use of the blower results in saving of a considerable amount of energy compared to a conventional on-site compressor unit as well as a considerable reduction in the sound pollution produced.

A further advantage of the present invention also consists in the use of the electric vector motor able to operate as a braking generator. In accordance with the invention, the electric vector motor ensures that the entire system is highly reliable even when subject to prolonged stress at the maximum braking torque. The system thus obtained ensures extremely precise regulation as well as the capacity to recover the energy produced during braking in order to pre-heat the water for production of the steam.

## Claims

1. Mobile unit for repairing and/or relining pipes, comprising:
a device (4) for supplying and depositing a material (5) for repairing and/or relining pipes, in the form of a tubular sheath or the like, said device (4) being provided with: a housing (7) for said material (5) which is wound at least partially, around a motor-driven shaft (4a) extending inside said housing (7); at least one hollow supply portion (11) having a connection opening (11a) and an expulsion opening (11b) arranged on respectively opposite sides, said supply portion (11) being hinged on said housing (7) and being movable between an operating position, where said connection opening (11b) is in fluid communication with a corresponding access opening (9) formed through said housing (7) so as to allow feeding of said material (5) through said expulsion opening (11b), and a non-operating position, where said supply portion (11) is arranged at a distance from said housing (7) so as to disengage the access opening (9) of the latter;
at least one closing plate (28) which can be fixed onto said expulsion opening (11b) of said supply portion (11), said closing plate (28) having at least one through-opening (28a) in fluid communication with said expulsion opening (11b);
compressed-air supply means (30), operationally associated with said device (4) for supplying and depositing said material (5), for placing said housing (7) under a predetermined pressure during operation of said unit (1), said supply means (30) being able to be activated when said supply portion (11) is arranged in the operating position for inflating said tubular sheath (6) of material (5) and causing feeding thereof through said supply portion (11);
steam generating means (34), operationally associated with said supply device (4), for applying steam to said tubular sheath (6) of material (5), at a temperature and for a period of time sufficient for hardening thereof, said steam generating means (34) being able to be activated when said tubular sheath (6) of material (5) is at least partly inserted inside a pipe (3) to be repaired and/or relined,
**characterized in that** it comprises fast-locking means (14), operationally arranged between said access opening (9) of said housing (7) and said connection opening (11a) of said supply portion (11), said fast-locking means (14) being able to be switched between a disengaged condition, where the movement of said supply portion (11) between the non-operating position and the operating position can be performed, and an engaged condition, where the supply portion (11) is locked in the operating position with said connection opening (11a) hermetically engaged with said access opening (9) of said housing (7);

2. Unit according to Claim 1, wherein said fast-closing means (14) comprise:
a coupling flange (15) engaged opposite and substantially around said connection opening (11a) of said supply portion (11),
a pair of locking frames (19) operationally engaged opposite said access opening (9) of said housing (7) and movable between an open position, where said supply portion (11) is displaceable with respect to said housing (7), and a closed position, where said supply portion (11) is locked against said housing (7) so as to ensure a hermetic connection between the access opening (9) of the latter and the connection opening (11a) of said supply portion (11).

3. Unit according to Claim 2, wherein:
said coupling flange (15) extends substantially parallel to the shape of said connection opening (11a) of said supply portion (11) and has an outer edge (16) which is at least partly toothed, said outer edge (16) being provided with a plurality of teeth (16a) alternating with a plurality of recesses (16b);
each locking frame (19) has, along a plane of lie substantially parallel to the plane of lie of the access opening (9) of said housing (7), an open shape, and a substantially U-shaped profile, in cross-section, defining a contact edge (20), an intermediate wall (21) extending transversely with respect to said contact edge (20) and a locking edge (22) extending from said intermediate wall (21) substantially parallel to said contact edge (20), said locking edge (22) being defined by a plurality of teeth (19a) alternating with a plurality of recesses (19b), which are able to mate respectively with said recesses (16b) and said teeth (16a) of said coupling flange (15) of said supply portion (11).

4. Unit according to Claim 3, wherein said fast-closing means (14) also comprise at least one movement device (13), preferably a pair of fluid-dynamic actuators (13a), operationally associated with said locking frames (19), so as to move the latter relatively between the open position and the closed position along a plane substantially parallel to the plane of lie of the access opening (9) of said housing (7), said locking frames (19) being spaced from each other, in the open position, so that the teeth (19a) and the recesses (19b) of the latter are substantially aligned with respect to the recesses (16b) and the teeth (16a) of said coupling flange (15) of said supply portion (11), and being mutually joined together, in the closed position, so as to define a closed frame, in which the teeth (19a) and the recesses (19b) of said locking frames (19) are aligned respectively with the teeth (16a) and the recesses (16b) of said coupling flange (15) of said supply portion (11) when situated in the operating position, namely with said coupling flange (15) arranged against said contact edges (20) of said locking frames (19) and arranged between said contact edges (20) and said locking edges (22).

5. Unit according to Claim 4, wherein said locking frames (19) are provided with a plurality of fixing holes (26) for engagement of respective threaded fixing members (18), said fixing holes (26) being aligned with other locking holes (26) formed through at least one contact plate (17) of the supply portion (11) when said supply portion (11) is locked in the operating position by said locking frames (19).

6. Unit according to Claim 5, wherein said fixing holes (26) in said contact plate (17) and said locking frames (19) are arranged in lateral zones of said supply portion (11).

7. Unit according to any one of the preceding claims, wherein said compressed-air supply means (30) comprise at least one blower (30a) for the production of compressed air at a low pressure, preferably not higher than 2 bar, more preferably not higher than 1 bar, even more preferably not higher than 0.9 bar, said blower (30a) being able to regulate automatically the air flow produced, depending on a preselected pressure value for the inside of said housing (7) of said supply device (4) and deposition device (11).

8. Unit according to any one of the preceding claims, wherein said motor-driven shaft (4a) of said housing (7) is operationally connected to an electric vector motor (32), said electric vector motor (32) being able to be switched between a first operating condition, where it rotationally actuates said motor-driven shaft (4a), and a second operating condition, where it operates as a device for braking said motor-driven shaft (4a), by means of torque absorption.

9. Unit according to any one of the preceding claims, wherein said closing plate (28) has, opposite the through-opening (28a), a substantially cylindrical nozzle (28b), said nozzle (28b) projecting so as to protrude, transversely from said closing plate (28), through said expulsion opening (11b) of said supply portion (11) so as to lie inside the latter when situated in the operating position and having a cylindrical outer surface (28c) which is designed to support an end portion (6a) of said tubular sheath (6) of material (5) which can be fitted onto it, and a cylindrical inner surface which defines a corresponding guide channel for feeding and expelling said tubular sheath (6), said unit (1) comprising moreover at least one locking member (29) which can be fitted onto the cylindrical outer surface (28c) of said nozzle (28b) so as to press against the latter said end portion (6a) of said tubular sheath (6) of material (5), said locking member (29) retaining said tubular sheath (6) on said nozzle (28b).

10. Unit according to Claim 9, wherein said locking member (29) comprises at least one band (29a) with tensioning elements (29b) and/or at least one locking strap (29c) which is preferably metallic.

## Patentansprüche

1. Fahrbare Anlage zur Reparatur und / oder Instandsetzung von Rohrleitungen, die umfasst:
eine Vorrichtung (4) zur Zufuhr und Ablage eines Materials (5) für die Reparatur und / oder Instandsetzung von Rohrleitungen in Form einer rohrförmigen Ummantelung oder ähnlichem, wobei diese Vorrichtung (4) verfügt über: eine Hülle (7) zur Aufnahme des genannten Materials (5), das zumindest teilweise um eine motorbetriebene Welle (4a) gewickelt wird, die sich im Inneren dieser zur Aufnahme dienenden Hülle (7) erstreckt; mindestens einem hohlen Element zur Zufuhr (11) mit einer Anschluss- (11a) und einer Ausstoßöffnung (11b), die aus einander gegenüberliegenden Teilen bestehen, wobei sich das genannte Element zu Zufuhr (11), da es auf der genannten zur Aufnahme dienenden Hülle (7) mit Scharnieren befestigt ist und sich zwischen einer Betriebsposition, in der diese Anschlussöffnung (11b) zum Durchfluss mit einer entsprechenden Zufuhröffnung (9) verbunden ist, die in der genannten zur Aufnahme dienenden Hülle (7) hergestellt wurde, um den Vorschub des Materials (5) durch die Ausstoßöffnung (11b) zu ermöglichen, sowie einer inaktiven Position bewegen kann, in der das genannte Element zur Zufuhr (11) von der zur Aufnahme dienenden Hülle (7) entfernt ist, um deren Zufuhröffnung (9) freizugeben;
mindestens einer Abschlussplatte (28), die an dieser Ausstoßöffnung (11b) des genannten Elementes zur Zufuhr (11) angebracht werden kann, wobei diese Abschlussplatte (28) mindestens eine Durchflussöffnung (28a) aufweist, die mit der genannten Ausstoßöffnung (11b) zum Durchfluss verbunden ist;
Mitteln zur Zufuhr (30) von Druckluft, die für den Betrieb mit der genannten Vorrichtung (4) zur Zufuhr und Ablage des Materials (5) verbunden sind, um die genannten zur Aufnahme dienende Hülle (7) während des Betriebs der Anlage (1) auf einen vorab festgelegten Druck zu bringen, wobei diese zur Zufuhr dienenden Mittel (30) eingeschaltet werden können, wenn sich das zur Beschickung dienende Element (11) in der Betriebsposition befindet, um die rohrförmige Ummantelung (6) des Materials (5) aufzublasen, und dessen Vorschub durch das Element zur Beschickung (11) zu bewirken;
Mitteln zur Erzeugung (34) von Dampf, die für den Betrieb mit der genannten Vorrichtung (4) zur Zufuhr verbunden sind, um in die genannte rohrförmige Ummantelung (6) des Materials (5) bei einer Temperatur und über einen Zeitraum Dampf einzuleiten, die für deren Aushärtung ausreichend ist, wobei diese Mittel zur Erzeugung (34) von Dampf eingeschaltet werden können, wenn sich die rohrförmige Ummantelung (6) des Materials (5) zumindest teilweise innerhalb einer zu reparierenden und / oder instand zu setzenden Bohrleitung (3) befindet,
**dadurch gekennzeichnet, dass** Vorrichtungen zur Schnellarretierung (14) vorhanden sind, die sich zwischen der Zuführöffnung (9) der zur Aufnahme dienenden Hülle (7) und der Anschlussöffnung (11a) des zur Zufuhr dienenden Elements (11) befinden, wobei diese Vorrichtungen zur Schnellarretierung (14) von einem deaktivierten Zustand, in dem die Bewegung dieses zur Zufuhr dienenden Elementes (11) zwischen der inaktiven Position und der Betriebsposition möglich ist, und einem arretierten Zustand umschaltbar sind, in dem das zur Zufuhr dienenden Element (11) in der Betriebsposition arretiert wird, während die Anschlussöffnung (11a) hermetisch dicht mit der Zufuhröffnung (9) der zur Aufnahme dienenden Hülle (7) verbunden ist.

2. Anlage gemäß Anspruch 1, bei der die Vorrichtungen zur Schnellarretierung (14) umfassen:
einen Passflansch (15), der an und im Wesentlichen um die Anschlussöffnung (11a) des zur Zufuhr dienenden Elementes (11) angeordnet ist,
einem Paar Arretierkästen (19), die für den Betrieb an der Zufuhröffnung (9) der zur Aufnahme dienenden Hülle (7) angebracht sind und sich zwischen einer geöffneten Position, in der das zur Zufuhr dienende Element (11) zur als Aufnahme dienenden Hülle (7) verschoben werden kann, und einer geschlossenen Position bewegen können, in der das zur Zufuhr dienende Element (11) gegen die zur Aufnahme dienenden Hülle (7) arretiert ist, um die hermetisch dichte Verbindung zwischen der Zufuhröffnung (9) des letzteren und der Anschlussöffnung (11a) des zur Zufuhr dienenden Elements (11) herzustellen.

3. Anlagen gemäß Anspruch 2, bei der:
sich der Passflansch (15) im Wesentlichen parallel zur Form der Anschlussöffnung (11a) des zur Zufuhr dienenden Elementes (11) erstreckt sowie einen äußeren Rand (16) aufweist, der zumindest teilweise gezahnt ist, wobei dieser äußere Rand (16) über eine Vielzahl von Zähnen (16a) verfügt, die sich mit einer Vielzahl von Aussparungen (16b) abwechseln;
jeder Arretierkasten (19) weist auf einer Auflagefläche, die im Wesentlichen zur Auflagefläche der Zufuhröffnung (9) der zur Aufnahme dienenden Hülle (7) parallel ist, eine offene Form und ein Profil mit einem im Wesentlichen "U"-förmigen Querschnitt auf, in dem sich ein Anschlagrand (20), eine sich quer zu diesem Anschlagrand (20) erstreckende Zwischenwand (21) sowie ein von dieser Zwischenwand (21) im Wesentlichen parallelen zum Anschlagrand (20) verlaufender Arretierrand (22) vorhanden ist, wobei dieser Arretierrand (22) aus einer Vielzahl von Zähnen (19a) gebildet wird, die sich mit einer Vielzahl von Aussparungen (19b) abwechseln, und jeweils die Aussparungen (16b) und die Zähne (16a) dieses Passflansches (15) an diesem zur Zufuhr dienenden Element (11) ineinander greifen.

4. Anlage gemäß Anspruch 3, bei der diese Vorrichtungen zur Schnellabsperrung (14) außerdem mindestens eine Vorrichtung zur Bewegung (13) umfassen, d.h. vorzugsweise ein Paar fluiddynamischer Antriebe (13a), die für den Betrieb mit diesen Arretierkästen (19) verbunden sind, um letztere entsprechend zwischen der geöffneten und der geschlossenen Position auf einer Ebene zu bewegen, die im Wesentlichen parallel zur Auflagefläche der Zufuhröffnung (9) der als Aufnahme dienenden Hülle (7) verläuft, wobei diese Arretierkästen (19) in der geöffneten Position voreinander entfernt sind, weshalb die Zähne (19a) und die Aussparungen (19b) dieser im Wesentlichen zu den Aussparungen (16b) und Zähnen (16a) des Passflansches (15) des zur Zufuhr dienenden Elementes (11) ausgerichtet sind, sowie sich in der geschlossenen Position aneinander befinden, wodurch ein geschlossener Kranz gebildet wird, bei dem die Zähne (19a) und Ausspaarungen (19b) der Arretierkästen (19) zu den Zähnen (16a) und Aussparungen (16b) des Passflansches (15) des zur Zufuhr dienenden Elementes (11) ausgerichtet sind, wenn dieses sich in der Betriebsposition befindet, d.h. wenn der Passflansch (15) die Anschlagränder (20) der Arretierkästen (19) berührt und sich zwischen den Anschlagrändern (20) und Arretierrändem (22) befindet.

5. Anlage gemäß Anspruch 4, bei der die Arretierkästen (19) über eine Vielzahl von Durchlassöffnungen (26) zur Aufnahme von gleichvielen Befestigungselementen mit Gewinde (18) verfügen, wobei diese Befestigungsbohrungen (26) mit anderen Öffnungen zum Arretieren (26) ausgerichtet sind, die durch mindestens eine Anschlagplatte (17) des zur Zufuhr dienenden Elementes (11) hergestellt werden, wenn dieses zur Zufuhr dienende Element (11) in der Betriebsposition durch die Arretierkästen (19) gehalten wird.

6. Anlage gemäß Anspruch 5, bei der die Befestigungsbohrungen (26) in der Anschlagplatte (17) und in den Arretierkästen (19) an den Seitenbereichen des zur Zufuhr dienenden Elementes (11) angeordnet sind.

7. Anlage gemäß eines beliebigen der vorstehenden Ansprüche, bei der die Vorrichtungen (30) zur Zufuhr von Druckluft mindestens ein Gebläse (30a) zur Erzeugung von Druckluft mit niedrigem Druck umfassen, d.h. höchstens 2 bar und möglichst nicht mehr als 1 bar, sowie noch besser nicht mehr als 0,9 bar, wobei dieses Gebläse (30a) in der Lage ist, automatisch den erzeugten Luftdurchsatz in Abhängigkeit von einem vorab für das Innere der zur Aufnahme dieser Vorrichtungen zur Zufuhr (4) und Ablage (11) dienenden Hülle (7) gewählten Druckwert zu regeln.

8. Anlage gemäß eines beliebigen der vorstehenden Ansprüche, bei der die motorbetriebene Welle (4a) der zur Aufnahme dienenden Hülle (7) für den Betrieb mit einem elektrischen Vektormotor (32) verbunden ist, der zwischen einer ersten Betriebsstufe, in der er die motorbetriebene Welle (4a) in Rotation versetzt, und einer zweiten Betriebsstufe, in der er als Bremsvorrichtung der motorbetriebenen Welle (4a) wirkt, durch Drehmomentaufnahme umgeschaltet werden kann.

9. Anlage gemäß eines beliebigen der vorstehenden Ansprüche, bei der die Abschlussplatte (28) an der Durchflussöffnung (28a) einen im Wesentlichen zylinderförmigen Stutzen (28b) aufweist, der in Querrichtung von dieser Abschlussplatte (28) durch die Ausstoßöffnung (11b) des zur Zufuhr dienenden Elementes (11) herausragt, während er sich in der Betriebsposition in dessen Inneren befindet und eine zylinderförmige Außenseite (28c) aufweist, die ein Endstück (6a) der rohrförmigen Ummantelung (6) aus Material (5) aufnehmen kann, die darauf geschoben werden kann, sowie eine zylinderförmige Innenseite, die einen entsprechenden Führungskanal für den Vorschub und Ausstoß der rohrförmigen Ummantelung (6) bildet, wobei diese Anlage (1) außerdem über mindestens eine Arretiervorrichtung (29) verfügt, die auf der zylinderförmigen Außenseite (28c) des Stutzens (28b) angebracht werden kann, um das Endstück (6a) der rohrförmigen Ummantelung (6) aus Material (5) auf diese zu drücken, während die Arretiervorrichtung (29) die rohrförmige Ummantelung (6) auf dem Stutzen (28b) festhält.

10. Anlage gemäß Anspruch 9, bei der die Arretiervorrichtung (29) mindestens einen Bereich (29a) mit Zugankern (29b) und / oder mindestens eine Umreifung (29c) vorzugsweise aus Metall umfasst.

## Revendications

1. Installation mobile pour la réparation et/ou la reconstruction de conduites comprenant :
un dispositif (4) d'alimentation et de dépôt d'un matériel (5) pour les réparations et/ou les reconstructions de conduites, sous forme de gaine tubulaire ou analogue, ledit dispositif (4) étant muni de : une enveloppe (7) pour le logement dudit matériel (5) enroulé, au moins partiellement, autour d'un arbre motorisé (4a) se développant à l'intérieur de ladite enveloppe de logement (7) ; au moins une portion d'alimentation (11) creuse présentant une ouverture de raccordement (11a) et une ouverture d'expulsion (11b) disposées sur les côté respectivement opposés, ladite portion d'alimentation (11) étant articulée sur ladite enveloppe de logement (7) et se déplaçant entre une position opérationnelle, dans laquelle ladite ouverture de raccordement (11b) est en communication de liquide avec une ouverture d'accès correspondante (9) réalisée à travers ladite enveloppe de logement (7) pour permettre l'avance dudit matériel (5) à travers ladite ouverture d'expulsion (11b), et une position non opérationnelle, dans laquelle ladite portion d'alimentation (11) est éloignée de ladite enveloppe de logement (7) pour désengager l'ouverture d'accès (9) de ce dernier ;
au moins une plaque de fermeture (28) pouvant être fixée sur ladite ouverture d'expulsion (11b) de ladite portion d'alimentation (11), ladite plaque de fermeture (28) présentant au moins une ouverture de passage (28a) en communication de liquide avec ladite ouverture d'expulsion (11b) ;
des moyens d'alimentation (30) d'air comprimé opérationnellement associés audit dispositif (4) d'alimentation et de dépôt dudit matériel (5) pour mettre ladite enveloppe de logement (7) sous une pression prédéterminée durant le fonctionnement de ladite installation (1), lesdits moyens d'alimentation (30) pouvant être activés quand ladite portion d'alimentation (11) est disposée dans une position opérationnelle pour gonfler ladite gaine tubulaire (6) de matériel (5) et déterminer l'avance de cette dernière à travers ladite portion d'alimentation (11) ;
des moyens de production (34) de vapeur opérationnellement associés audit dispositif (4) d'alimentation pour distribuer de la vapeur à ladite gaine tubulaire (6) de matériau (5), à une température et pendant un temps suffisant pour permettre le durcissement de ce dernier, lesdits moyens de production (34) de vapeur pouvant être activés quand ladite gaine tubulaire (6) de matériel (5) est au moins partiellement insérée à l'intérieur d'une conduite (3) à réparer et/ou à reconstruire,
**caractérisé en ce qu'**il comprend des moyens de blocage rapide (14) opérationnellement interposés entre ladite ouverture d'accès (9) de ladite enveloppe de logement (7) et ladite ouverture de raccordement (11a) de ladite portion d'alimentation (11), lesdits moyens de blocage rapide (14) pouvant être commutés entre une condition de désengagement, dans laquelle peut être exécuté le déplacement de ladite portion d'alimentation (11) entre la position non opérationnelle et la position opérationnelle, et une condition de serrage, dans laquelle la portion d'alimentation (11) est bloquée dans la position opérationnelle avec ladite ouverture de raccordement (11a) engagée hermétiquement par rapport à ladite ouverture d'accès (9) de ladite enveloppe de logement (7).

2. Installation selon la revendication 1, dans laquelle lesdits moyens de fermeture rapide (14) comprennent :
une bride d'accouplement (15) engagée au niveau et substantiellement autour de ladite ouverture de raccordement (11a) de ladite portion d'alimentation (11),
une paire de cadres de blocage (19) opérationnellement engagés au niveau de ladite ouverture d'accès (9) de ladite enveloppe de logement (7) et se déplaçant entre une position d'ouverture, dans laquelle ladite portion d'alimentation (11) peut être déplacée par rapport à ladite enveloppe de logement (7), et une position de fermeture, dans laquelle ladite portion d'alimentation (11) est bloquée contre ladite enveloppe de logement (7) pour déterminer la connexion hermétique entre l'ouverture d'accès (9) de cette dernière et l'ouverture de raccordement (11a) de ladite portion d'alimentation (11).

3. Installation selon la revendication 2, dans laquelle :
ladite bride d'accouplement (15) s'étend substantiellement parallèle à la silhouette de ladite ouverture de raccordement (11a) de ladite portion d'alimentation (11) et présente un bord externe (16) au moins en partie denté, ledit bord externe (16) étant muni d'une pluralité de dents (16a) alternant avec une pluralité de renfoncements (16b);
chaque cadre de blocage (19) présente, le long d'un plan d'appui substantiellement parallèle au plan d'appui de l'ouverture d'accès (9) de ladite enveloppe de logement (7), une forme ouverte, et un profil, en section transversale, substantiellement en "U", où sont définis un bord de butée (20), une paroi intermédiaire (21) s'étendant transversalement par rapport audit bord de butée (20) et un bord de blocage (22) s'étendant de ladite paroi intermédiaire (21) substantiellement parallèle audit bord de butée (20), ledit bord de blocage (22) étant défini par une pluralité de dents (19a) alternant avec une pluralité de renfoncements (19b) pouvant coïncider respectivement avec lesdits renfoncements (16b) et lesdites dents (16a) de ladite bride d'accouplement (15) de ladite portion de alimentation (11).

4. Installation selon la revendication 3, dans laquelle lesdits moyens de fermeture rapide (14) comprennent également au moins un dispositif de manutention (13), de préférence une paire d'actionneurs hydrodynamiques (13a), opérationnellement associés auxdits cadres de blocage (19) pour actionner relativement ces derniers entre la position d'ouverture et la position de fermeture le long d'un plan substantiellement parallèle au plan d'appui de l'ouverture d'accès (9) de ladite enveloppe de logement (7), lesdits cadres de blocage (19) étant espacés l'un de l'autre, dans la position d'ouverture, de sorte que les dents (19a) et les renfoncements (19b) de ces derniers soient substantiellement alignés respectivement sur les renfoncements (16b) et sur les dents (16a) de ladite bride d'accouplement (15) de ladite portion d'alimentation (11), et étant réciproquement unis, dans la position de fermeture, de sorte à définir un cadre fermé, dans laquelle les dents (19a) et les renfoncements (19b) desdits cadres de blocage (19) sont alignés respectivement sur les dents (16a) et sur les renfoncements (16b) de ladite bride d'accouplement (15) de ladite portion d'alimentation (11) quand elle se trouve dans une position opérationnelle, c'est-à-dire avec ladite bride d'accouplement (15) disposée contre lesdits bords de butée (20) desdits cadres de blocage (19) et interposée entre lesdits bords de butée (20) et lesdits bords de blocage (22).

5. Installation selon la revendication 4, dans laquelle lesdits cadres de blocage (19) sont munis d'une pluralité d'orifices de fixation (26) pour l'engagement des éléments filetés respectifs de fixation (18), lesdits orifices de fixation (26) étant alignés sur d'autres orifices de blocage (26) réalisés à travers au moins une plaque de butée (17) de la portion d'alimentation (11) quand ladite portion d'alimentation (11) est bloquée dans une position opérationnelle par lesdits cadres de blocage (19).

6. Installation selon la revendication 5, dans laquelle lesdits orifices de fixation (26) sur ladite plaque de butée (17) et lesdits cadres de blocage (19) sont disposés au niveau de zones latérales de ladite portion d'alimentation (11).

7. Installation selon l'une quelconque des revendications précédentes, dans laquelle lesdits moyens (30) d'alimentation d'air comprimé comprennent au moins une soufflante (30a) pour la production d'air comprimé à basse pression, de préférence non supérieure à 2 bars, plus de préférence non supérieure à 1 bar, de manière encore plus préférentielle non supérieure à 0,9 bar, ladite soufflante (30a) étant en mesure de régler automatiquement le débit d'air produit, en fonction d'une valeur de pression présélectionnée pour l'intérieur de ladite enveloppe de logement (7) desdits dispositif d'alimentation (4) et dispositif de dépôt (11).

8. Installation selon l'une quelconque des revendications précédentes, dans laquelle ledit arbre motorisé (4a) de ladite enveloppe de logement (7) est opérationnellement raccordé à un monteur électrique vectoriel (32), ledit moteur électrique vectoriel (32) étant commutable entre une première condition d'utilisation, dans laquelle celui-ci actionne ledit arbre motorisé (4a) en rotation, et une seconde condition d'utilisation, dans laquelle celui-ci fonctionne comme un dispositif de freinage dudit arbre motorisé (4a), à l'absorption du couple.

9. Installation selon l'une quelconque des revendications précédentes, dans laquelle ladite plaque de fermeture (28) présente, au niveau de l'ouverture de passage (28a), une buse (28b) substantiellement cylindrique, ladite buse (28b) dépassant en saillie, transversalement par rapport à ladite plaque de fermeture (28), à travers ladite ouverture d'expulsion (11b) de ladite portion d'alimentation (11) pour se trouver à l'intérieur de cette dernière quand elle se trouve dans une position opérationnelle et présentant une surface externe cylindrique (28c) disposée pour supporter une portion terminale (6a) de ladite gaine tubulaire (6) de matériau (5) qui peut être ajustée sur cette dernière, et une surface interne cylindrique qui délimite un canal de guidage correspondant pour l'avance et l'expulsion de ladite gaine tubulaire (6), ladite installation (1) comprenant également au moins un élément de blocage (29) applicable sur la surface externe cylindrique (28c) de ladite buse (28b) pour presser sur cette dernière ladite portion terminale (6a) de ladite gaine tubulaire (6) de matériau (5), ledit élément de blocage (29) retenant ladite gaine tubulaire (6) sur ladite buse (28b).

10. Installation selon la revendication 9, dans laquelle ledit élément de blocage (29) comprend au moins une bande (29a) à tirants (29b) et/ou au moins une sangle de blocage (29c), de préférence métallique.
